# EUROPÄISCHE PATENTSCHRIFT

(11) **EP 3 408 074 B1**
(45) Veröffentlichungstag und Bekanntmachung des Hinweises auf die Patenterteilung: **06.05.2026**
(21) Anmeldenummer: 17708230.2
(22) Anmeldetag: 01.03.2017
(51) Int. Cl.: B29C 67/00, B33Y 10/00, B33Y 30/00

(54) **VERFAHREN UND VORRICHTUNG ZUM GENERATIVEN HERSTELLEN EINES DREIDIMENSIONALEN OBJEKTS, PROGRAM UND STEUERUNG**
METHOD AND DEVICE FOR THE GENERATIVE PRODUCTION OF A THREE-DIMENSIONAL OBJECT PROGRAM AND CONTROL DEVICE
PROCÉDÉ ET DISPOSITIF POUR LA PRODUCTION GÉNÉRATIVE D'UN OBJET TRIDIMENSIONNEL, PROGRAMME ET DISPOSITIF DE COMMANDE

(30) Priorität: 03.03.2016 DE 102016203556
(43) Veröffentlichungstag der Anmeldung: 05.12.2018
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE); KELLER, Peter, 82152 Krailling (DE)
(74) Vertreter: Prüfer & Partner mbB Patentanwälte · Rechtsanwälte
(86) Internationale Anmeldenummer: PCT/EP2017/054777
(87) Internationale Veröffentlichungsnummer: WO 2017/149014

(56) Entgegenhaltungen:
- DE-A1- 102012 212 587
- DE-A1- 102013 226 670
- US-A1- 2015 266 239

## Beschreibung

Die vorliegende Erfindung bezieht sich auf eine Vorrichtung und ein Verfahren zum generativen Herstellen eines dreidimensionalen Objekts durch schichtweises Aufbringen und selektives Verfestigen eines Aufbaumaterials, vorzugsweise eines Pulvers.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen mit einem Laserstrahl selektiv verfestigt.

Aus der EP 1 058 675 B1 ist es bekannt, beim Lasersintern von Keramikpulver eine mittels einer Klinge aufgetragene Pulverschicht mittels einer Walze zu verdichten. Dadurch soll die Zeit verringert werden, die beim Sintern in der festen Phase des Keramikpulvers erforderlich ist.

DE 10 2012 212587 A1 zeigt ein Verfahren zum Herstellen eines dreidimensionalen Objekts durch schichtweises Aufbringen und selektives Verfestigen eines Aufbaumaterials, wobei das Aufbringen einer Gesamtschicht mit einer bestimmten Gesamthöhe unterteilt ist in das Aufbringen mehrerer Teilschichten, deren Höhen sich zu der Gesamthöhe addieren. Dabei wird eine Teilschicht beheizt bevor eine weitere Teilschicht aufgebracht wird.

DE 10 2013 226670 A1 zeigt eine generative Schichtbauvorrichtung mit einer Pulveraustragseinheit und einer Pulverabflachungsvorrichtung, die sich integriert mit einer Lichtabstrahlungseinheit bewegen. Die Pulveraustragseinheit trägt dabei Pulver auf ein Baubett aus, welches von der Pulverabflachungsvorrichtung zu einer Pulverschicht ausgezogen wird.

US 2015/266239 A1 zeigt eine Schichtbauvorrichtung zum generativen Herstellen eines dreidimensionalen Objekts aus einem Körner enthaltenden zähflüssigen Gemisch. Eine Schicht des Gemischs wird von einer Aufbringvorrichtung aufgebracht und anschließend selektiv verfestigt, indem ein Bindemittel in die Schicht eingebracht und dieses selektiv ausgehärtet wird.

Die Aufgabe der vorliegenden Erfindung besteht darin, eine alternative bzw. verbesserte Vorrichtung bzw. ein alternatives bzw. verbessertes Verfahren zum generativen Herstellen eines dreidimensionalen Objekts durch schichtweises Aufbringen und selektives Verfestigen eines Aufbaumaterials bereitzustellen, bei denen insbesondere bevorzugt der Schichtauftrag verbessert ist.

Diese Aufgabe wird gelöst durch ein Herstellungsverfahren gemäß Anspruch 1, ein Computerprogramm gemäß Anspruch 11, eine Steuerungseinrichtung gemäß Anspruch 12 und eine Herstellvorrichtung gemäß Anspruch 6. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtungen weitergebildet sein oder umgekehrt, bzw. die Merkmale der Vorrichtungen können auch jeweils untereinander zur Weiterbildung genutzt werden.

Das erfindungsgemäße Herstellungsverfahren dient zum generativen Herstellen eines dreidimensionalen Objekts durch schichtweises Aufbringen und selektives Verfestigen eines Aufbaumaterials, vorzugsweise eines Pulvers. Es enthält die Schritte des Aufbringens einer Schicht des Aufbaumaterials innerhalb des Baufelds mittels eines in einer Beschichtungsrichtung über das Baufeld fahrenden Beschichters, des selektiven Verfestigens der aufgebrachten Schicht des Aufbaumaterials an Stellen, die einem Querschnitt des herzustellenden Objekts entsprechen, mittels einer Verfestigungsvorrichtung, und des Wiederholens der Schritte des Auftragens und des Verfestigens, bis das dreidimensionale Objekt fertiggestellt ist. Die Verfestigungsvorrichtung und/oder eine Verdichtungsvorrichtung fährt hinter dem Beschichter in der Beschichtungsrichtung über das Baufeld. Ein auf einen Bereich zwischen dem über das Baufeld fahrenden Beschichter und der hinter dem Beschichter über das Baufeld fahrenden Verfestigungsvorrichtung und/oder Verdichtungsvorrichtung begrenztes lokales Einwirken auf die aufgebrachte Schicht des Aufbaumaterials wird durchgeführt. Dadurch können beispielsweise die Eigenschaften der aufgebrachten Schicht des Aufbaumaterials vor dem Verdichten und/oder vor dem Verfestigen in einer für den Herstellungsvorgang vorteilhaften Weise verändert werden.

Vorzugsweise umfasst das Aufbringen der Schicht des Aufbaumaterials mittels des Beschichters das Ausziehen des aufgebrachten Aufbaumaterials zu einer Schicht nach vorgegebenen Kriterien hinsichtlich einer Flächenerstreckung und/oder Dicke und/oder Oberflächenbeschaffenheit und/oder Dichte der Schicht. Eine derart gezielte Formung der Schicht des Aufbaumaterials bietet den Vorteil, dass eine nachfolgende Verfestigung des Aufbaumaterials unter kontrollierten Bedingungen stattfinden kann. Dies kann eine hohe Bauteilqualität und eine Reproduzierbarkeit des Herstellungsvorgangs begünstigen.

Vorzugsweise umfasst das lokal begrenzte Einwirken auf die aufgebrachte Schicht des Aufbaumaterials eine lokale Erwärmung. Dadurch können beispielsweise ein schnelleres Erreichen der gewünschten Arbeitstemperatur und eine präzisere Einstellung der Schichtdicke bewirkt werden.

Vorzugsweise erfolgt die lokale Erwärmung mittels Induktion und/oder Strahlung. Dadurch kann beispielsweise ein lokales Erwärmen mit einfachen Mitteln durchgeführt werden.

Vorzugsweise umfasst das lokal begrenzte Einwirken auf die aufgebrachte Schicht des Aufbaumaterials ein Einbringen eines Absorbermittels und/oder eines Inhibitormittels in die Aufbaumaterialschicht, wobei das Absorbermittel und/oder Inhibitormittel vorzugsweise flüssig, pastös und/oder fest ist und/oder mit Flüssigkeit oder Paste gefüllte Hohlpartikel enthält. Dadurch kann beispielsweise auch mit unselektiver Belichtung eine selektive Verfestigung erfolgen.

Vorzugsweise umfasst das lokal begrenzte Einwirken auf die aufgebrachte Schicht des Aufbaumaterials eine Vorbelichtung.

Dadurch kann beispielsweise ein erstes Ansintern oder eine chemische Reaktion in dem Aufbaumaterial bewirkt werden.

Vorzugsweise umfasst das lokal begrenzte Einwirken auf die aufgebrachte Schicht des Aufbaumaterials eine Beaufschlagung der Schicht mit einem mit zumindest einer Komponente des Aufbaumaterials mindestens oberflächig interagierenden Fluids. Dadurch kann beispielsweise das Fluid besser in die Pulverschicht eindringen als nach der Verdichtung.

Vorzugsweise umfasst das lokal begrenzte Einwirken auf die aufgebrachte Schicht des Aufbaumaterials einen zumindest teilweisen Entzug mindestens einer Komponente der Aufbaumaterialschicht. Dadurch kann beispielsweise das Aufbaumaterial als Paste aufgebracht werden, dem nachträglich ein Suspensions- oder Lösemittel entzogen wird.

Das erfindungsgemäße Computerprogramm ist in eine programmierbare Steuereinheit ladbar und enthält Programmcodemittel, um alle Schritte des erfindungsgemäßen Verfahrens auszuführen, wenn das Computerprogramm auf der Steuereinheit ausgeführt wird. Dadurch kann beispielsweise das erfindungsgemäße Verfahren mittels eines Computerprogramms gesteuert werden.

Die erfindungsgemäße Steuerungseinrichtung ist für eine Herstellvorrichtung zum generativen Herstellen eines dreidimensionalen Objekts durch schichtweises Aufbringen und selektives Verfestigen eines Aufbaumaterials bereitgestellt. Die Herstellvorrichtung enthält einen in einer Beschichtungsrichtung über ein Baufeld bewegbaren Beschichter zum Aufbringen einer Schicht des Aufbaumaterials innerhalb des Baufelds und eine Verfestigungsvorrichtung zum selektiven Verfestigen der aufgebrachten Schicht an Stellen, die einem Querschnitt des herzustellenden Objekts entsprechen. Die Steuereinheit ist ausgebildet, die Herstellvorrichtung so zu steuern, dass sie die Schritte des Aufbringens und des selektiven Verfestigens wiederholt, bis das Objekt fertiggestellt ist, die Verfestigungsvorrichtung und/oder eine ferner in der Herstellvorrichtung enthaltene Verdichtungsvorrichtung hinter dem Beschichter in der Beschichtungsrichtung über das Baufeld fahren lässt und ein auf einen Bereich zwischen dem über das Baufeld fahrenden Beschichter und der hinter dem Beschichter über das Baufeld fahrenden Verfestigungsvorrichtung und/oder Verdichtungsvorrichtung begrenztes lokales Einwirken auf die aufgebrachte Schicht des Aufbaumaterials durchführt. Dadurch kann beispielsweise das erfindungsgemäße Verfahren mittels einer Steuereinheit gesteuert werden.

Die erfindungsgemäße Herstellvorrichtung zum generativen Herstellen eines dreidimensionalen Objekts durch schichtweises Aufbringen und selektives Verfestigen eines Aufbaumaterials enthält einen in einer Beschichtungsrichtung über ein Baufeld bewegbaren Beschichter zum Aufbringen einer Schicht des Aufbaumaterials innerhalb des Baufelds und eine Verfestigungsvorrichtung zum selektiven Verfestigen der aufgebrachten Schicht an Stellen, die einem Querschnitt des herzustellenden Objekts entsprechen. Die Herstellvorrichtung ist ausgebildet und/oder gesteuert, die Schritte des Aufbringens und des selektiven Verfestigens zu wiederholen, bis das Objekt fertiggestellt ist. Die Verfestigungsvorrichtung und/oder eine ferner in der Herstellvorrichtung enthaltene Verdichtungsvorrichtung sind hinter dem Beschichter in der Beschichtungsrichtung über das Baufeld verfahrbar angeordnet. Die Herstellvorrichtung ist ausgebildet und/oder gesteuert, ein auf einen Bereich zwischen dem über das Baufeld fahrenden Beschichter und der hinter dem Beschichter über das Baufeld fahrenden Verfestigungsvorrichtung und/oder Verdichtungsvorrichtung begrenztes lokales Einwirken auf die aufgebrachte Schicht des Aufbaumaterials durchzuführen. Dadurch kann beispielsweise das erfindungsgemäße Verfahren mittels einer Herstellvorrichtung durchgeführt werden.

Vorzugsweise ist die Verfestigungsvorrichtung eine Belichtungsvorrichtung, die zum Abgeben einer zum Verfestigen des Aufbaumaterials geeigneten Strahlung ausgebildet ist. Dadurch kann beispielsweise die zum Verfestigen des Materials erforderliche Energie mittels Strahlung in das Aufbaumaterial eingebracht werden.

Vorzugsweise enthält die Verdichtungsvorrichtung eine zum Verdichten der aufgebrachten Schicht des Aufbaumaterials geeignete Klinge oder Walze. Dadurch kann beispielsweise das Verdichten der Schicht auf einfache Weise verwirklicht werden.

Vorzugsweise enthält die Herstellvorrichtung eine Induktionsspule und/oder eine Strahlungsheizung, die zwischen dem Beschichter und der Verfestigungsvorrichtung und/oder Verdichtungsvorrichtung über das Baufeld verfahrbar angeordnet ist. Dadurch kann beispielsweise das lokale Erwärmen der aufgebrachten Schicht einfach durchgeführt werden.

Vorzugsweise enthält die Herstellvorrichtung eine Vorbelichtungs-Energiequelle, die zwischen dem Beschichter und der Verfestigungsvorrichtung und/oder Verdichtungsvorrichtung über das Baufeld verfahrbar angeordnet ist, zum lokalen Vorbelichten der aufgebrachten Schicht. Dadurch kann beispielsweise ein erstes Ansintern oder eine chemische Reaktion in dem Aufbaumaterial bewirkt werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts gemäß einer ersten Ausführungsform der vorliegenden Erfindung.
- Fig. 2: zeigt einen Ausschnitt der in Fig. 1 gezeigten Vorrichtung beim Aufbringen einer Pulverschicht.
- Fig. 3: bis 7 zeigen einen Fig. 2 entsprechenden Ausschnitt gemäß einer zweiten bis sechsten Ausführungsform der vorliegenden Erfindung.

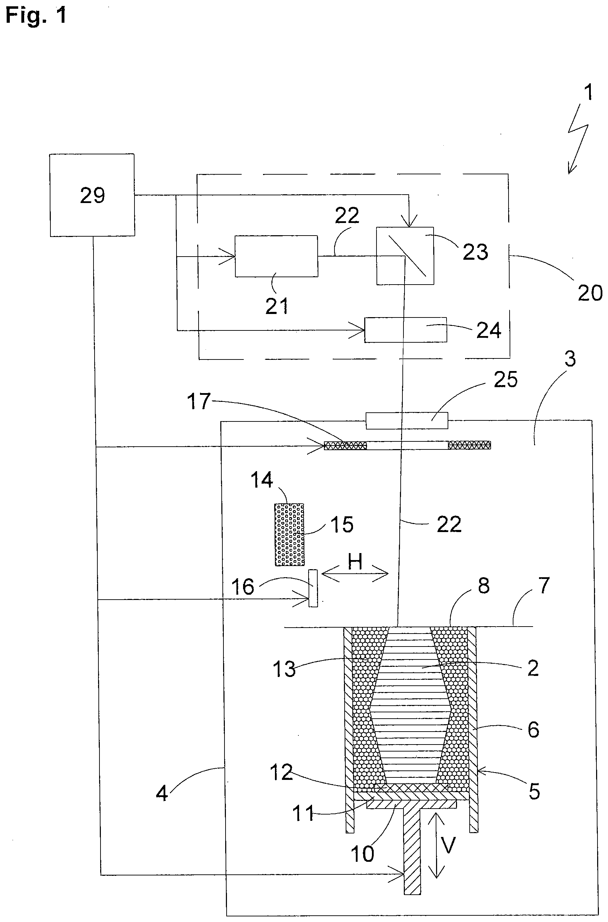

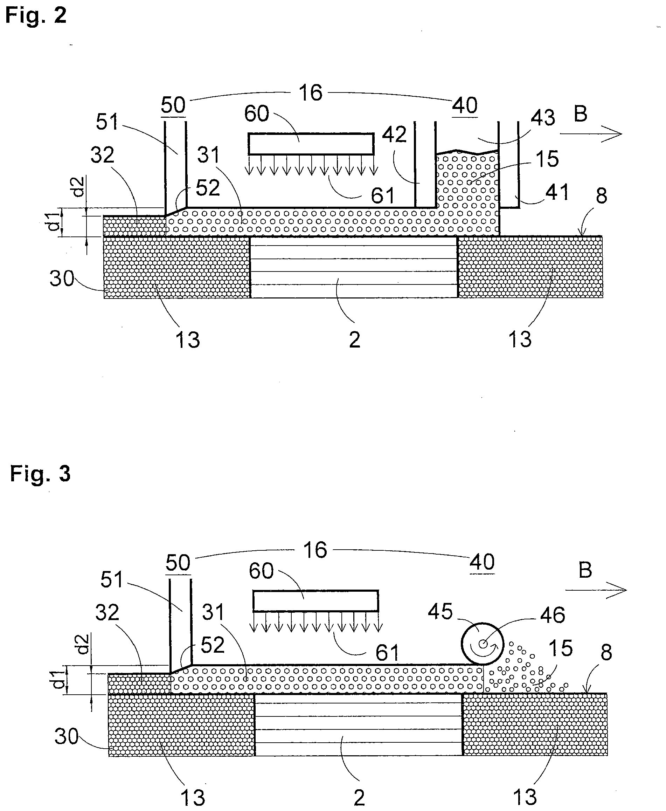

Im Folgenden wird mit Bezug auf Fig. 1 und 2 eine erste Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. In der Prozesskammer kann ferner eine globale Strahlungsheizung 17 angeordnet sein, die zum Beheizen des aufgebrachten Aufbaumaterials 15 dient. Die globale Strahlungsheizung 17 ist beispielsweise als Infrarotstrahler gebildet.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage 11, 12 oder eine bereits vorher vorhandene Pulverschicht auf. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Anschließend Optional wird anschließend das pulverförmige Aufbaumaterial 15 durch die globale Strahlungsheizung 17 aufgeheizt. Nach Erreichen einer Arbeitstemperatur wird der Querschnitt des herzustellenden Objekts 2 von dem Laserstrahl 22 abgetastet, sodass das pulverförmige Aufbaumaterial 15 an den Stellen verfestigt wird, die dem Querschnitt des herzustellenden Objekts 2 entsprechen. Diese Schritte werden solange wiederholt, bis das Objekt 2 fertiggestellt ist und der Prozesskammer 3 entnommen werden kann.

Der Vorgang der Beschichtung ist in Fig. 2 näher dargestellt. In einem durch vorangegangene Prozessschritte aufgebauten Pulverbett 30 ist der verfestigte Teil des herzustellenden Objekts 2 von unverfestigt gebliebenem Pulver 13 umgeben. Auf dieses Pulverbett 30 wird dann mittels einer Bewegung des Beschichters 16 in einer Beschichtungsrichtung B eine weitere Pulverschicht des Aufbaumaterials 15 aufgetragen.

Wie in Fig. 2 gezeigt enthält der Beschichter 16 eine Beschichtungseinheit 40 mit einer in der Beschichtungsrichtung B vorne liegenden Beschichterklinge (vordere Beschichterklinge 41) und einer in der Beschichtungsrichtung B hinten liegenden Beschichterklinge (hintere Beschichterklinge 42). Diese beiden Beschichterklingen erstrecken sich quer, vorzusweise senkrecht zu der Beschichtungsrichtung B schließen einen Zwischenraum 43 in der Beschichtungsrichtung B und in der Gegenrichtung zur Beschichtungsrichtung B zumindest teilweise ab. Dieser durch die beiden Beschichterklingen 41, 42 begrenzte Zwischenraum 43 ist dazu ausgebildet, einen Vorrat an pulverförmigem Aufbaumaterial 15 aufzunehmen. Beim Verfahren des Beschichters 14 in der Beschichtungsrichtung B verbleibt ein Teil dieses pulverförmigen Aufbaumaterials 13 auf dem Pulverbett 30 und wird von der hinteren Beschichterklinge 42 zu einer gleichmäßigen dünnen Pulverschicht 31 mit einer Dicke d1 ausgezogen. Diese Dicke ist durch den Abstand der Unterkante der hinteren Beschichterklinge 42 von dem Pulverbett 30 bestimmt.

Der Beschichter 16 enthält weiter eine Verdichtungseinheit 50, die in einem vorbestimmten Abstand von der Beschichtungseinheit 40 hinter dieser herfährt. Die Verdichtungseinheit 50 enthält in der vorliegenden Ausführungsform eine Verdichterklinge 51, die sich quer, vorzugsweise senkrecht zu der Beschichtungsrichtung B erstreckt. Der Abstand der Unterkante der Verdichterklinge 51 von dem Pulverbett 30 ist geringer als derjenige der Unterkante der hinteren Beschichterklinge 42. Dadurch wird die Schichtdicke der Pulverschicht verringert, und die Pulverkörner werden dichter zusammengedrückt. Es entsteht eine verdichtete Pulverschicht 32 mit einer Dicke d2, die kleiner als die Dicke d1 ist.

Zum Verbessern der Verdichtungswirkung enthält die Verdichterklinge 51 an ihrer Unterkante eine Verdichtungsfläche 52, die in der Beschichtungsrichtung B ansteigt. Diese Verdichtungsfläche 52 kann über die gesamte Unterkante der Verdichterklinge 51 verlaufen oder nur über einen Teil der Unterkante der Verdichterklinge 51. Der Anstieg kann linear in einem festen Winkel erfolgen, mit sich änderndem Winkel oder auch in einer gekrümmten Kurve. Diese Verdichtungsfläche 52 übt bei einer Bewegung in der Bewegungsrichtung B der Verdichterklinge 51 über die neu aufgebrachte Schicht 31 auf das Pulver eine Kraftkomponente nach unten aus, wodurch die Pulverkörner zusammengedrückt werden und die Pulverschicht verdichtet wird.

Zwischen der Beschichtungseinheit 40 und der Verdichtungseinheit 50 ist eine lokale Strahlungsheizung 60 angeordnet, die gemeinsam mit der Beschichtungseinheit 40 und der Verdichtungseinheit 50 in der Beschichtungsrichtung B verfahren wird. Die lokale Strahlungsheizung 60 ist beispielsweise als Infrarotstrahler gebildet. Diese lokale Strahlenheizung sendet eine Heizstrahlung (z.B. Infrarotstrahlung) 61 aus, die lokal begrenzt auf den Bereich zwischen der Beschichtungseinheit 40 und der Verdichtungseinheit 50 einwirkt.

Durch dieses lokale Heizen der Pulverschicht mittels der lokalen Strahlenheizung 60 zusätzlich zu dem Heizen des gesamten Baufelds mittels der globalen Strahlungsheizung 17 kann schneller die gewünschte Arbeitstemperatur erreicht werden. Außerdem können dadurch die neu aufgebrachten Pulverschichten homogener durchwärmt und Temperaturunterschiede innerhalb der aufgebrachten Pulverschicht verringert werden, was zu einem stabileren Prozess und damit zu besseren mechanischen Eigenschaften des hergestellten Objekts führt.

Das lokale Beheizen könnte alternativ zu der oben beschriebenen Anordnung auch hinter der Verdichtungseinheit vorgenommen werden. Das lokale Beheizen vor der Verdichtungseinheit bringt jedoch zusätzliche Vorteile: Durch die Erwärmung dehnen sich die Pulverkörner aus. Dadurch ändert sich bei einem Beheizen nach der Verdichtung mittels einer hinter der Verdichtungseinheit angebrachten lokalen Strahlungsheizung und/oder der globalen Strahlungsheizung die Schichtdicke der aufgebrachten Schicht, was sich nachteilig auf die Maßhaltigkeit des hergestellten Objekts auswirken könnte. Wird das Pulver jedoch bereits vor der Verdichtung auf eine erhöhte Temperatur vorgeheizt, ist die nachträgliche Ausdehnung der Pulverkörner und der dadurch resultierende Effekt auf das hergestellte Objekt viel geringer. Daher ist die vorliegende Ausführungsform geeignet, zuverlässig eine definierte Schichtdicke sicherzustellen.

Fig. 3 zeigt eine zweite Ausführungsform. Bei dieser Ausführungsform enthält die Beschichtungseinheit 40 anstelle der Beschichterklingen 41, 42 eine Beschichterwalze 45. Ansonsten entspricht der Aufbau dieser Ausführungsform demjenigen der ersten Ausführungsform.

Die Beschichterwalze 45 erstreckt sich quer, vorzugsweise senkrecht zu der Beschichtungsrichtung B und ist um ihre Längsachse 46 drehbar gelagert. Während des Beschichtungsvorgangs wird die Beschichterwalze 45 so angetrieben, dass sie sich mit Bezug auf die Beschichtungsrichtung B gegenläufig dreht (gegen den Uhrzeigersinn in Fig. 3). Das bedeutet, dass ihre Drehrichtung entgegengesetzt der Drehrichtung einer Walze ist, die in der Beschichtungsrichtung B auf einer Unterlage abrollen würde.

Pulverförmiges Aufbaumaterial 15, das vor der Beschichterwalze 45 auf das Pulverbett 30 aufgebracht wurde oder von der Beschichterwalze 45 über das Pulverbett geschoben wird, wird dadurch zu einer gleichmäßigen dünnen Pulverschicht 31 mit einer Dicke d1 ausgezogen, ohne all zu sehr verdichtet zu werden. Das führt zu einem besonders scherungsarmen und damit gleichmäßigen Schichtauftrag ohne innere Spannungen. Die Dicke d1 ist durch den Abstand der Unterkante der Beschichterwalze 45 von dem Pulverbett 30 bestimmt.

Auch hier ist der Abstand der Unterkante der Verdichterklinge 51 von dem Pulverbett 30 geringer als derjenige der Unterkante der Beschichterwalze 45, wodurch auch hier eine verdichtete Pulverschicht 32 mit einer Dicke d2 entsteht, die kleiner als die Dicke d1 ist.

Wie in der ersten Ausführungsform ist zwischen der Beschichtungseinheit 40 und der Verdichtungseinheit 50 eine lokale Strahlungsheizung 60 angeordnet. Daher können mit der zweiten Ausführungsform dieselben Wirkungen erzielt werden wie mit der ersten Ausführungsform.

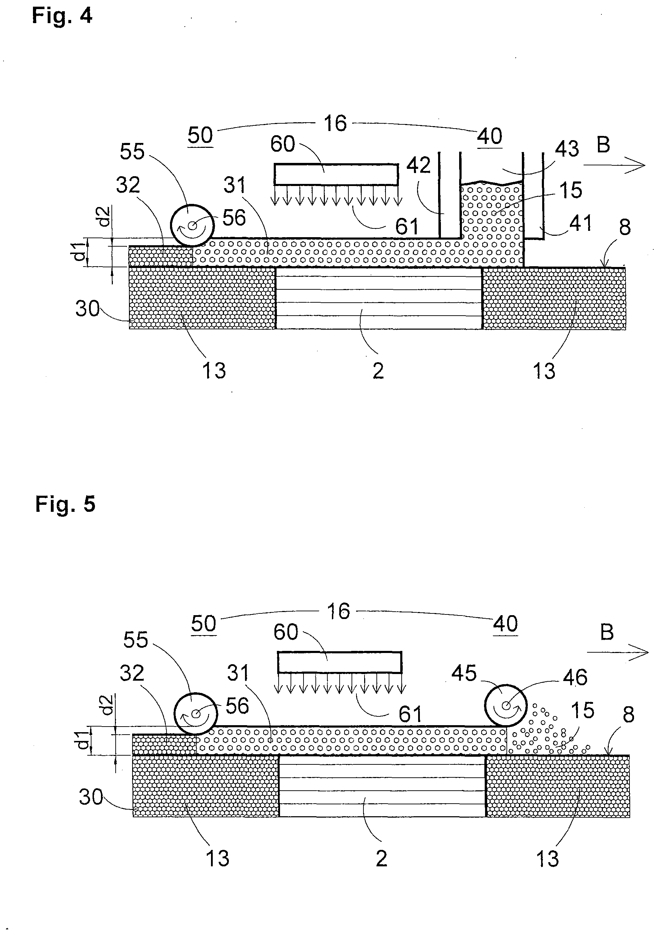

Fig. 4 zeigt eine dritte Ausführungsform. Bei dieser Ausführungsform enthält die Verdichtungseinheit 50 anstelle der Verdichterklinge 51 eine Verdichterwalze 55. Ansonsten entspricht der Aufbau dieser Ausführungsform demjenigen der ersten Ausführungsform.

Die Verdichterwalze 55 erstreckt sich quer, vorzugsweise senkrecht zu der Beschichtungsrichtung B und ist um ihre Längsachse 56 drehbar gelagert. Während des Beschichtungsvorgangs steht die Verdichterwalze 55 still oder wird bevorzugt so angetrieben, dass sie sich mit Bezug auf die Beschichtungsrichtung B gleichläufig dreht (im Uhrzeigersinn in Fig. 4). Das bedeutet, dass ihre Drehrichtung gleichgerichtet der Drehrichtung einer Walze ist, die in der Beschichtungsrichtung B auf einer Unterlage abrollen würde.

Der Abstand der Unterkante der Verdichterwalze 55 von dem Pulverbett 30 ist geringer als derjenige der Unterkante der hinteren Beschichterklinge 42. Dadurch übt sowohl die stillstehende Verdichterwalze 55 als auch, und zwar in verstärkem Umfang, die gleichläufig angetriebene Verdichterwalze 55 bei ihrer Bewegung in der Bewegungsrichtung B über die neu aufgebrachte Schicht 31 eine Kraftkomponente auf das Pulver nach unten aus, wodurch die Pulverkörner zusammengedrückt und die Pulverschicht verdichtet wird. Dadurch entsteht auch hier eine verdichtete Pulverschicht 32 mit einer Dicke d2, die kleiner als die Dicke d1 ist.

Wie in der ersten Ausführungsform ist zwischen der Beschichtungseinheit 40 und der Verdichtungseinheit 50 eine lokale Strahlungsheizung 60 angeordnet. Daher können mit der dritten Ausführungsform dieselben Wirkungen erzielt werden wie mit der ersten Ausführungsform.

Fig. 5 zeigt eine vierte Ausführungsform. Bei dieser Ausführungsform sind sowohl die Beschichterklingen 41, 42 durch die Beschichterwalze 45 der zweiten Ausführungform ersetzt als auch die Verdichterklinge 51 durch die Verdichterwalze 55 der dritten Ausführungsform. Ansonsten entspricht der Aufbau dieser Ausführungsform demjenigen der ersten Ausführungsform.

Der Abstand der Unterkante der Verdichterwalze 55 von dem Pulverbett 30 ist geringer als derjenige der Unterkante der Beschichterwalze 45. Somit erzeugt auch hier Verdichterwalze 55 aus der von der Beschichterwalze 45 aufgetragenen Pulverschicht 31 mit der Dicke d1 eine verdichtete Pulverschicht 32 mit einer Dicke d2, die kleiner als die Dicke d1 ist.

Wie in der ersten Ausführungsform ist zwischen der Beschichtungseinheit 40 und der Verdichtungseinheit 50 eine lokale Strahlungsheizung 60 angeordnet. Daher können mit der vierten Ausführungsform dieselben Wirkungen erzielt werden wie mit der ersten Ausführungsform.

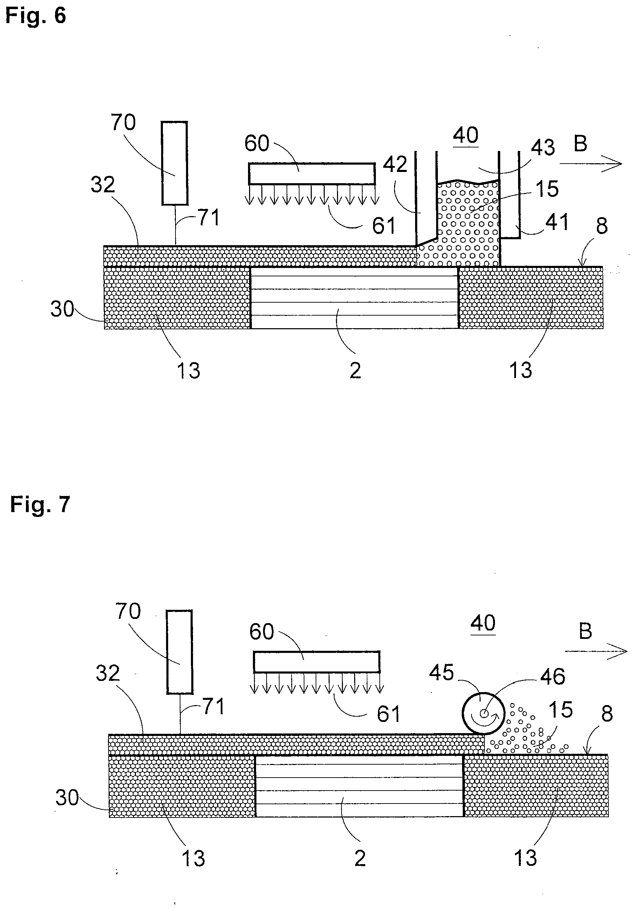

Fig. 6 zeigt eine fünfte Ausführungsform. Bei dieser Ausführungsform übt die Beschichtungseinheit 40, die schematisch als Doppelklinge wie in der ersten Ausführungsform dargestellt ist, sowohl die Funktion des Aufbringens einer Pulverschicht als auch die Funktion des Verdichtens der Pulverschicht aus. Dazu kann beispielsweise die hintere Beschichtungsklinge 42 mit einer ähnlichen Verdichtungsfläche versehen sein wie die Verdichtungsfläche 52 der Verdichterklinge 51.

Anstelle der Verdichtungseinheit 50 fährt eine Belichtungseinheit 70 in einem vorbestimmten Abstand hinter der Beschichtungseinheit hier. Diese Belichtungseinheit 70 ist alternativ oder zusätzlich zu der Belichtungseinheit 20 bereitgestellt und erzeugt eine Laserstrahlung 71, die auf die Arbeitsebene fokussiert wird.

Die Belichtungseinheit 70 ist vorzugsweise als Zeilenbelichter ausgebildet, der sich quer, vorzugsweise senkrecht zu der Beschichtungsrichtung B erstreckt und in der Lage ist, selektiv eine sich in seiner Längsrichtung erstreckende Linie zu belichten, die sich über die gesamten Breite des zu belichtenden Bereichs erstreckt.

Für diese Belichtung kann die Menge der durch die Laserstrahlung 71 eingebrachten Energie so eingestellt sein, dass eine vollständige Verfestigung des pulverförmigen Aufbaumaterials 15 erfolgt. Es kann aber auch nur eine Teilbelichtung erfolgen, bei der die Menge der durch die Laserstrahlung 71 eingebrachten Energie so eingestellt ist, dass keine vollständige Verfestigung des pulverförmigen Aufbaumaterials 15 erfolgt. Die restliche, zum vollständige Verfestigen des Pulvers erforderliche Energie wird dann nach Abschluss der Beschichtung und der Teilbelichtung durch die Belichtungsvorrichtung 20 eingebracht.

Die lokale Strahlenheizung 60 sorgt dabei dafür, dass die für die jeweilige Belichtungsart gewünschte Arbeitstemperatur der Pulverschicht erreicht wird, bevor der Belichtungseinheit 70 über die Pulverschicht fährt.

Fig. 7 zeigt eine sechste Ausführungsform. Bei dieser Ausführungsform sind die Beschichterklingen 41, 42 durch die Beschichterwalze 45 der zweiten Ausführungform ersetzt. Ansonsten entspricht der Aufbau dieser Ausführungsform demjenigen der fünften Ausführungsform.

Wie in der fünften Ausführungsform ist zwischen der Beschichtungseinheit 40 und der Belichtungseinheit 70 eine lokale Strahlungsheizung 60 angeordnet. Daher können mit der sechsten Ausführungsform dieselben Wirkungen erzielt werden wie mit der fünften Ausführungsform.

Die Merkmale der oben beschriebenen Ausführungsformen können, soweit möglich, miteinander kombiniert und verändert werden. Es kann beispielsweise sowohl eine Verdichtungseinheit als auch eine Belichtungseinheit hinter der Beschichtungseinheit herfahren, und zwischen diesen Einheiten kann ein lokal begrenztes Einwirken auf die aufgebrachte Pulverschicht erfolgen.

Anstelle der zum Aufbringen der Pulverschicht dienenden Doppelklinge oder Beschichterwalze kann jedes beliebige Beschichtungselement verwendet werden, das zum Aufbringen einer Pulverschicht geeignet ist, beispielsweise auch eine Monoklinge oder eine Rakel.

Unabhängig von der Art des verwendeten Beschichtungselements kann das Aufbringen der Pulverschicht das Ausziehen des aufgebrachten Aufbaumaterials zu einer dünnen, vorzugsweise gleichmäßigen Pulverschicht und/oder ein Glätten der Oberfläche der Pulverschicht umfassen. Bei den eingangs genannten generativen Herstellungsverfahren beträgt eine Dicke einer einzelnen Aufbaumaterialschicht typischerweise weniger als 1mm, z. B. 100µm. Die Pulverschicht kann gezielt derart geformt werden, dass sie z. B. eine im Wesentlichen konstante Dicke aufweist, oder mit einer vorgegebenen Steigung kontinuierlich dicker oder dünner wird, oder einem anderen vorgegebenen Höhenprofil folgt, das beispielsweise durch mathematische Vorgaben definiert ist. Die Gestalt einer einzelnen Schicht kann dabei in Abhängigkeit von einem Relief des Untergrunds, z. B. bei verfestigten und unverfestigten Stellen in der darunterliegenden Pulvermaterialschicht, unterschiedlich sein. Dieses Aufbringen einer Pulverschicht geht also über das bloße Aufbringen von Aufbaumaterial mittels eines Dosierers hinaus, der das Pulver unkontrolliert auf das Baufeld rieseln lässt. Ein solcher Dosierer kann dem eigentlichen Beschichter vorgeschaltet sein, so dass der Beschichter nicht mehr die Funktionen des Aufnehmens und Transportierens des Aufbaumaterials ausführt, sondern diese durch den Dosierer versehen werden.

Anstelle der zum Verdichten der aufgebrachten Pulverschicht dienenden Verdichterklinge oder Verdichterwalze kann jedes beliebige Verdichtungselement verwendet werden, das zum Verdichten einer Pulverschicht geeignet ist, beispielsweise auch eine Rakel.

Anstelle der zum Verfestigung der aufgebrachten Pulverschicht dienenden Belichtungsvorrichtung kann jede beliebige Verfestigungsvorrichtung verwendet werden, die zum Verfestigung einer Pulverschicht geeignet ist, beispielsweise auch eine Quelle für einen Teilchenstrahl oder eine Auftragsvorrichtung für einen Kleber.

Anstelle der lokalen Strahlungsheizung zum lokalen Heizen der aufgebrachten Pulverschicht kann auch eine andere lokal wirkende Heizvorrichtung verwendet werden, beispielsweise eine Induktionsspule zum induktiven Heizen der Pulverschicht.

Ein lokales auf den Bereich zwischen der Beschichtungseinheit und der Verdichtungseinheit und/oder der Verfestigungseinheit begrenztes Einwirken auf die Pulverschicht kann aber auch auf andere Art und Weise geschehen als durch Beheizen.

Beispielsweise kann das lokal begrenzte Einwirken auf die aufgebrachte Schicht des Aufbaumaterials eine Beaufschlagung der Schicht mit einem Fluid umfassen, das zumindest oberflächig mit dem Aufbaumaterial oder mit zumindest einer Komponente des Aufbaumaterials interagiert. Dieses Fluid kann ein Gas und/oder eine Flüssigkeit sein. Durch das Einbringen vor der Verdichtung in die dann noch lockerere Pulverschicht kann es besser in die Pulverschicht eindringen als nach der Verdichtung.

Das lokal begrenzte Einwirken auf die aufgebrachte Schicht des Aufbaumaterials kann beispielsweise auch ein Einbringen eines Absorbermittels und/oder eines Inhibitormittels in die Aufbaumaterialschicht umfassen. Dadurch wird die Strahlungsabsorption an den entsprechenden Stellen durch das Absorbermittel erhöht bzw. durch das Inhibitormittels verringert. Das Absorbermittel und/oder Inhibitormittel kann flüssig, fest oder pastös sein und vollflächig oder selektiv aufgetragen werden. Bei selektiver Auftragung kann auch bei einer unselektiven Belichtung ein selektiver Bereich der Pulverschicht verfestigt werden. Durch die nachfolgende Verdichtung kann das Absorbermittel und/oder Inhibitormittel fester in das Pulver gedrückt werden und somit besser an dessen Oberfläche anhaften. Alternativ können Hohlpartikel, beispielsweise Hohlkugeln, die mit einem flüssigen Absorbermittel und/oder Inhibitormittel gefüllt sind, aufgebracht und durch die nachfolgende Verdichtung zerstört werden, sodass so große Mengen an Absorbermittel und/oder Inhibitormittel sehr gut selektiv in die Pulverschicht eingebracht werden können. Auch ohne nachfolgende Verdichtung kann das lokale Einbringen eines Absorbermittels und/oder eines Inhibitormittels zwischen einer Beschichtungseinheit und einer hinter dieser herfahrenden Belichtungseinheit erfolgen, die dann beispielsweise unselektiv belichtet werden kann.

Anstelle des Aufbringens weiterer Komponenten kann das lokal begrenzte Einwirken auf die aufgebrachte Schicht des Aufbaumaterials auch beispielsweise einen zumindest teilweisen Entzug mindestens einer Komponente der Aufbaumaterialschicht umfassen. Dadurch können aus dem Pulver vor der Verdichtung bestimmte Stoffe entweichen, beispielsweise Restmonomere und/oder Feuchtigkeit. Es könnte aber auch beim Beschichten statt eines Pulvers ein pastöses Material aufgebracht werden, das aus Pulver und einer Flüssigkeit als Suspensions- oder Lösemittel zusammengesetzt ist, und vor dem Verdichten und/oder Belichten das Suspensions- oder Lösemittel entfernt werden. Dadurch könnten auch extrem feine Pulver aufgebracht werden, die als Pulver allein nicht rieselfähig wären und somit nicht als Pulverschicht aufgebracht werden könnten.

Das lokal begrenzte Einwirken auf die aufgebrachte Schicht des Aufbaumaterials kann beispielsweise auch eine lokale Vorbelichtung umfassen. Zwischen Beschichtung und nachfolgender Verdichtung und/oder Belichtung könnte eine Belichtung mit einem Laser- und/oder Elektronenstrahl vollflächig oder selektiv erfolgen, die eine Veränderung im aufgetragenen Pulver bewirkt. Das könnte beispielsweise eine thermische Reaktion sein, z.B. ein erstes Ansintern und/oder Verschmelzen oder auch nur Verankern, damit bei der nachfolgenden Verdichtung nichts verschoben wird. Es könnten aber auch chemische Reaktionen sein, die eine Veränderung in dem Pulver bewirken. Ein Beispiel dafür sind laseraktive Pigmente, die durch eine Bestrahlung mit einer bestimmen Wellenlänge ihren Absorptionskoeffizienten ändern und z.B. schwarz werden. Somit wäre eine flächige oder selektive Veränderung des Absorptionskoeffizienten möglich. Dies würde vorteilhaft vor der Verdichtung des Pulvers durchgeführt werden, weil aufgrund der geringeren Packungsdichte der Laser tiefer in das Pulver eindringen kann und somit eine Aktivierung homogener möglich wäre.

Auch Kombinationen dieser und anderer lokaler Einwirkungsmöglichkeiten können verwirklicht werden.

Wenn die Beschichtungseinheit so ausgebildet ist, dass sie eine Beschichtung in zwei Richtungen zulässt, wie es beispielsweise bei der in Fig. 2 gezeigten Beschichtungseinheit mit der Doppelklinge der Fall ist, können auch auf beiden Seiten je eine über das Baufeld fahrende Verdichtungsvorrichtung und/oder Verfestigungsvorrichtung angeordnet sein und je nach Beschichtungsrichtung der Beschichtungseinheit und der ihr folgenden Verdichtungsvorrichtung und/oder Verfestigungsvorrichtung ein lokal begrenztes Einwirken auf die neu aufgebrachte Pulverschicht erfolgen.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Statt des Ablenkens eines Strahls kann auch das Belichten mit einem verfahrbaren Zeilenbelichter angewendet werden. Auch auf das selektive Maskensintern, bei dem eine ausgedehnte Lichtquelle und eine Maske verwendet werden, oder auf das High-Speed-Sintern (HSS), bei dem auf dem Aufbaumaterial selektiv ein Material aufgebracht wird, das die Strahlungsabsorption an den entsprechenden Stellen erhöht (Absorptionssintern) oder verringert (Inhibitionssintern), und dann unselektiv großflächig oder mit einem verfahrbaren Zeilenbelichter belichtet wird, kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das generative Herstellen eines Objekts mittels schichtweisen Auftragens und selektiven Verfestigens eines Aufbaumaterials unabhängig von der Art und Weise, in der das Aufbaumaterial verfestigt wird.

Als Aufbaumaterial können verschiedene Materialien verwendet werden, vorzugsweise Pulver, insbesondere Metallpulver, Kunststoffpulver, Keramikpulver, Sand, gefüllte oder gemischte Pulver.

## Patentansprüche

1. Herstellungsverfahren zum generativen Herstellen eines dreidimensionalen Objekts (2) durch schichtweises Aufbringen und selektives Verfestigen eines Aufbaumaterials (15), das ein Pulver ist, mit den Schritten:
Aufbringen einer Schicht des Aufbaumaterials (15) innerhalb eines Baufelds (8) mittels eines in einer Beschichtungsrichtung (B) über das Baufeld (8) fahrenden Beschichters (16), wobei in einem durch vorangegangene Prozessschritte aufgebauten Pulverbett (30) ein verfestigter Teil des herzustellenden Objekts (2) von unverfestigt gebliebenem Pulver (13) umgeben ist und auf dieses Pulverbett (30) dann mittels einer Bewegung des Beschichters (16) in der Beschichtungsrichtung (B) eine weitere Pulverschicht des Aufbaumaterials (15) aufgetragen wird,
selektives Verfestigen der aufgebrachten Schicht des Aufbaumaterials (15) an Stellen, die einem Querschnitt des herzustellenden Objekts (2) entsprechen, mittels einer Verfestigungsvorrichtung (20; 70), und
Wiederholen der Schritte des Aufbringens und des Verfestigens, bis das dreidimensionale Objekt (2) fertiggestellt ist,
wobei die Verfestigungsvorrichtung (70) und/oder eine Verdichtungsvorrichtung (50) hinter einer Beschichtungseinheit (40) des Beschichters (16) in der Beschichtungsrichtung (B) über das Baufeld (8) fährt, wobei die Beschichtungseinheit (40) eine in der Beschichtungsrichtung (B) vorne liegende Beschichterklinge (41) und eine in der Beschichtungsrichtung (B) hinten liegende Beschichterklinge (42) enthält oder eine Beschichterwalze (45) enthält, und wobei die Verdichtungsvorrichtung eine zum Verdichten der aufgebrachten Schicht des Aufbaumaterials geeignete Klinge (51) oder eine Walze (55) enthält, und wobei der Abstand der Unterkante der Klinge (51) oder der Walze (55) der Verdichtungsvorrichtung von dem Pulverbett (30) geringer ist als derjenige der Unterkante der hinten liegenden Beschichterklinge (42) oder der Beschichterwalze (45) und
ein auf einen Bereich zwischen der über das Baufeld (8) fahrenden Beschichtungseinheit (40) und der hinter der Beschichtungseinheit (40) über das Baufeld (8) fahrenden Verfestigungsvorrichtung (70) und/oder Verdichtungsvorrichtung (50) begrenztes lokales Einwirken auf die aufgebrachte Schicht des Aufbaumaterials (15) durchgeführt wird und wobei
das lokal begrenzte Einwirken auf die aufgebrachte Schicht des Aufbaumaterials (15) eine lokale Erwärmung umfasst, wobei die lokale Erwärmung vorzugsweise mittels Induktion und/oder Strahlung erfolgt, und/oder
wobei das lokal begrenzte Einwirken auf die aufgebrachte Schicht des Aufbaumaterials (15) eine Vorbelichtung umfasst und/oder
wobei das lokal begrenzte Einwirken auf die aufgebrachte Schicht (15) des Aufbaumaterials einen zumindest teilweisen Entzug mindestens einer Komponente der Aufbaumaterialschicht umfasst.

2. Herstellungsverfahren gemäß Anspruch 1, bei dem das Aufbringen der Schicht des Aufbaumaterials (15) mittels des Beschichters (16) ein Ausziehen des aufgebrachten Aufbaumaterials zu einer Schicht (31) nach vorgegebenen Kriterien hinsichtlich einer Flächenerstreckung und/oder Dicke und/oder Oberflächenbeschaffenheit und/oder Dichte der Schicht umfasst.

3. Herstellungsverfahren gemäß Anspruch 1 oder 2, bei dem das lokal begrenzte Einwirken auf die aufgebrachte Schicht des Aufbaumaterials (15) ein Einbringen eines Absorbermittels und/oder eines Inhibitormittels in die Aufbaumaterialschicht umfasst.

4. Herstellungsverfahren gemäß Anspruch 3, bei dem das Absorbermittel und/oder Inhibitormittel flüssig, pastös und/oder fest ist und/oder mit Flüssigkeit oder Paste gefüllte Hohlpartikel enthält.

5. Herstellungsverfahren gemäß einem der Ansprüche 1 bis 4, bei dem das lokal begrenzte Einwirken auf die aufgebrachte Schicht des Aufbaumaterials (15) eine Beaufschlagung der Schicht mit einem mit zumindest einer Komponente des Aufbaumaterials (15) mindestens oberflächig interagierenden Fluids umfasst.

6. Herstellvorrichtung (1) zum generativen Herstellen eines dreidimensionalen Objekts (2) durch schichtweises Aufbringen und selektives Verfestigen eines Aufbaumaterials (15), wobei das Aufbaumaterial ein Pulver ist, enthaltend:
einen in einer Beschichtungsrichtung (B) über ein Baufeld (8) bewegbaren Beschichter (16) zum Aufbringen einer Schicht des Aufbaumaterials (8) innerhalb des Baufelds (8), wobei in einem durch vorangegangene Prozessschritte aufgebauten Pulverbett (30) ein verfestigter Teil des herzustellenden Objekts (2) von unverfestigt gebliebenem Pulver (13) umgeben ist und auf dieses Pulverbett (30) dann mittels einer Bewegung des Beschichters (16) in der Beschichtungsrichtung (B) eine weitere Pulverschicht des Aufbaumaterials (15) aufgetragen wird, und
eine Verfestigungsvorrichtung (20; 70) zum selektiven Verfestigen der aufgebrachten Schicht an Stellen, die einem Querschnitt des herzustellenden Objekts (2) entsprechen,
wobei die Herstellvorrichtung (1) ausgebildet und/oder gesteuert ist, die Schritte des Aufbringens und des selektiven Verfestigens zu wiederholen, bis das Objekt (2) fertiggestellt ist,
die Verfestigungsvorrichtung (70) und/oder eine ferner in der Herstellvorrichtung (1) enthaltene Verdichtungsvorrichtung (50) hinter einer Beschichtungseinheit (40) des Beschichters (16) in der Beschichtungsrichtung (B) über das Baufeld (8) verfahrbar angeordnet sind, wobei die Beschichtungseinheit (40) eine in der Beschichtungsrichtung (B) vorne liegende Beschichterklinge (41) und eine in der Beschichtungsrichtung (B) hinten liegende Beschichterklinge (42) enthält oder eine Beschichterwalze (45) enthält, und wobei die Verdichtungsvorrichtung eine zum Verdichten der aufgebrachten Schicht des Aufbaumaterials geeignete Klinge (51) oder eine Walze (55) enthält, und wobei der Abstand der Unterkante der Klinge (51) oder der Walze (55) der Verdichtungsvorrichtung von dem Pulverbett (30) geringer ist als derjenige der Unterkante der hinten liegenden Beschichterklinge (42) oder der Beschichterwalze (45), und
die Herstellvorrichtung (1) gesteuert ist, ein auf einen Bereich zwischen der über das Baufeld (8) fahrenden Beschichtungseinheit (40) und der hinter der Beschichtungseinheit (40) über das Baufeld (8) fahrenden Verfestigungsvorrichtung (70) und/oder Verdichtungsvorrichtung (50) begrenztes lokales Einwirken auf die aufgebrachte Schicht des Aufbaumaterials (15) durchzuführen und wobei
das lokal begrenzte Einwirken auf die aufgebrachte Schicht des Aufbaumaterials (15) eine lokale Erwärmung umfasst, wobei die lokale Erwärmung vorzugsweise mittels Induktion und/oder Strahlung erfolgt, und/oder
wobei das lokal begrenzte Einwirken auf die aufgebrachte Schicht des Aufbaumaterials (15) eine Vorbelichtung umfasst und/oder
wobei das lokal begrenzte Einwirken auf die aufgebrachte Schicht (15) des Aufbaumaterials einen zumindest teilweisen Entzug mindestens einer Komponente der Aufbaumaterialschicht umfasst.

7. Herstellvorrichtung gemäß Anspruch 6, bei der die Verfestigungsvorrichtung eine Belichtungsvorrichtung (70) ist, die zum Abgeben einer zum Verfestigen des Aufbaumaterials geeigneten Strahlung (71) ausgebildet ist.

8. Herstellvorrichtung gemäß Anspruch 6 oder 7, bei der die Verdichtungsvorrichtung eine zum Verdichten der aufgebrachten Schicht des Aufbaumaterials geeignete Klinge (51) oder Walze (55) enthält.

9. Herstellvorrichtung gemäß einem der Ansprüche 6 bis 8, die eine Induktionsspule und/oder eine Strahlungsheizung (60) enthält, die zwischen der Beschichtungseinheit (40) und der Verfestigungsvorrichtung (70) und/oder Verdichtungsvorrichtung (50) über das Baufeld (8) verfahrbar angeordnet ist, zum lokalen Erwärmen der aufgebrachten Schicht des Aufbaumaterials (15).

10. Herstellvorrichtung gemäß einem der Ansprüche 6 bis 9, die eine Vorbelichtungs-Energiequelle enthält, die zwischen der Beschichtungseinheit (40) und der Verfestigungsvorrichtung (70) und/oder Verdichtungsvorrichtung (50) über das Baufeld (8) verfahrbar angeordnet ist, zum lokalen Vorbelichten der aufgebrachten Schicht des Aufbaumaterials (15).

11. Computerprogramm, das in eine programmierbare Steuereinheit einer Herstellvorrichtung nach einem Ansprüche 6 bis 10 ladbar ist,
wobei die Herstellvorrichtung weiter eine Induktionsspule und/oder eine Strahlungsheizung (60) enthält, die zwischen der Beschichtungseinheit (40) und der Verfestigungsvorrichtung (70) und/oder Verdichtungsvorrichtung (50) über das Baufeld (8) verfahrbar angeordnet ist, zum lokalen Erwärmen der aufgebrachten Schicht des Aufbaumaterials (15), und die Herstellvorrichtung eine Vorbelichtungs-Energiequelle enthält, die zwischen der Beschichtungseinheit (40) und der Verfestigungsvorrichtung (70) und/oder Verdichtungsvorrichtung (50) über das Baufeld (8) verfahrbar angeordnet ist, zum lokalen Vorbelichten der aufgebrachten Schicht des Aufbaumaterials (15), und
wobei das Computerprogramm Programmcodemitteln aufweist, um alle Schritte eines Verfahrens gemäß einem der Ansprüche 1 bis 5 auszuführen, wenn das Computerprogramm auf der Steuereinheit ausgeführt wird.

12. Steuerungseinrichtung (29) für eine Herstellvorrichtung (1) nach einem der Ansprüche 6 bis 10,
wobei die Herstellvorrichtung weiter eine Induktionsspule und/oder eine Strahlungsheizung (60) enthält, die zwischen der Beschichtungseinheit (40) und der Verfestigungsvorrichtung (70) und/oder Verdichtungsvorrichtung (50) über das Baufeld (8) verfahrbar angeordnet ist, zum lokalen Erwärmen der aufgebrachten Schicht des Aufbaumaterials (15), und die Herstellvorrichtung eine Vorbelichtungs-Energiequelle enthält, die zwischen der Beschichtungseinheit (40) und der Verfestigungsvorrichtung (70) und/oder Verdichtungsvorrichtung (50) über das Baufeld (8) verfahrbar angeordnet ist, zum lokalen Vorbelichten der aufgebrachten Schicht des Aufbaumaterials (15), und
die Steuereinheit (29) ausgebildet ist, die Herstellvorrichtung (1) so zu steuern, dass sie alle Schritte eines Verfahrens gemäß einem der Ansprüche 1 bis 5 ausführt, wenn ein Computerprogramm gemäß Anspruch 11 auf der Steuereinheit ausgeführt wird.

## Claims

1. A manufacturing method for generatively manufacturing a three-dimensional object (2) by a layer-by-layer application and selective solidification of a building material (15), which is a powder, comprising the steps of:
applying a layer of the building material (15) within a build area (8) by means of a recoater (16) moving in a recoating direction (B) across the build area (8), wherein in a powder bed (30) built up by preceding process steps, a solidified part of the object (2) to be manufactured is surrounded by powder (13) that has remained unsolidified, and a further powder layer of the building material (15) is then applied onto this powder bed (30) by means of a movement of the recoater (16) in the recoating direction (B),
selectively solidifying the applied layer of the building material (15) at locations that correspond to a cross-section of the object (2) to be manufactured by means of a solidification device (20; 70), and
repeating the steps of applying and solidifying until the three-dimensional object (2) is completed,
wherein the solidification device (70) and/or a compaction device (50) moves behind a recoating unit (40) of the recoater (16) in the recoating direction (B) across the build area (8), wherein the recoating unit (40) includes a recoater blade (41) located at the front in the recoating direction (B) and a recoater blade (42) located at the rear in the recoating direction (B), or includes a recoater roller (45), and wherein the compaction device includes a blade (51) or a roller (55) suitable for compacting the applied layer of the building material, and wherein the distance of the lower edge of the blade (51) or the roller (55) of the compaction device from the powder bed (30) is less than that of the lower edge of the recoater blade (42) located at the rear or the recoater roller (45) and
a local action confined to a region between the recoating unit (40) moving across the build area (8) and the solidification device (70) and/or compaction device (50) moving behind the recoating unit (40) across the build area (8) is performed on the applied layer of the building material (15) and wherein
the locally confined action on the applied layer of the building material (15) comprises a local heating, wherein the local heating is preferably carried out by means of induction and/or radiation, and/or
wherein the locally confined action on the applied layer of the building material (15) comprises pre-irradiating and/or
wherein the locally confined action on the applied layer (15) of the building material comprises at least partially removing at least one constituent of the building material layer.

2. The manufacturing method according to claim 1, wherein applying the layer of the building material (15) by means of the recoater (16) comprises drawing out the applied building material into a layer (31) according to predetermined criteria concerning an areal extent and/or thickness and/or surface property and/or density of the layer.

3. The manufacturing method according to claim 1 or 2, wherein the locally confined action on the applied layer of the building material (15) comprises introducing an absorbing agent and/or an inhibiting agent into the building material layer.

4. The manufacturing method according to claim 3, wherein the absorbing agent and/or inhibiting agent is liquid, paste-like, and/or solid and/or contains hollow particles filled with a liquid or paste.

5. The manufacturing method according to one of claims 1 to 4, wherein the locally confined action on the applied layer of the building material (15) comprises applying a fluid onto the layer, which fluid at least surface-actively interacts with at least one constituent of the building material (15).

6. A manufacturing device (1) for generatively manufacturing a three-dimensional object (2) by a layer-by-layer application and selective solidification of a building material (15), wherein the building material is a powder, comprising:
a recoater (16) movable in a recoating direction (B) across a build area (8) for applying a layer of the building material (8) within the build area (8), wherein in a powder bed (30) built up by preceding process steps, a solidified part of the object (2) to be manufactured is surrounded by powder (13) that has remained unsolidified, and a further powder layer of the building material (15) is then applied onto this powder bed (30) by means of a movement of the recoater (16) in the recoating direction (B), and
a solidification device (20; 70) for selectively solidifying the applied layer at locations that correspond to a cross-section of the object (2) to be manufactured,
wherein the manufacturing device (1) is configured and/or controlled to repeat the steps of applying and selectively solidifying until the object (2) is completed,
the solidification device (70) and/or a compaction device (50) further contained in the manufacturing device (1) are arranged to be moveable behind a recoating unit (40) of the recoater (16) in the recoating direction (B) across the build area (8), wherein the recoating unit (40) includes a recoater blade (41) located at the front in the recoating direction (B) and a recoater blade (42) located at the rear in the recoating direction (B), or includes a recoater roller (45), and wherein the compaction device includes a blade (51) or a roller (55) suitable for compacting the applied layer of the building material, and wherein the distance of the lower edge of the blade (51) or the roller (55) of the compaction device from the powder bed (30) is less than that of the lower edge of the recoater blade (42) located at the rear or the recoater roller (45), and
the manufacturing device (1) is controlled to perform a local action on the applied layer of the building material (15), the local action being confined to a region between the recoating unit (40) moving across the build area (8) and the solidification device (70) and/or compaction device (50) moving behind the recoating unit (40) across the build area (8), and wherein
the locally confined action on the applied layer of the building material (15) comprises a local heating, wherein the local heating is preferably carried out by means of induction and/or radiation, and/or
wherein the locally confined action on the applied layer of the building material (15) comprises pre-irradiating and/or
wherein the locally confined action on the applied layer (15) of the building material comprises at least partially removing at least one constituent of the building material layer.

7. The manufacturing device according to claim 6, in which the solidification device is an irradiation device (70) configured to emit a radiation (71) that is suitable for solidifying the building material.

8. The manufacturing device according to claim 6 or 7, in which the compaction device comprises a blade (51) or roller (55) suitable for compacting the applied layer of the building material.

9. The manufacturing device according to one of claims 6 to 8, comprising an induction coil and/or a radiation heater (60) arranged between the recoating unit (40) and the solidification device (70) and/or compaction device (50) so as to be movable across the build area (8), for locally heating the applied layer of the building material (15).

10. The manufacturing device according to one of claims 6 to 9, comprising a pre-irradiation energy source arranged between the recoating unit (40) and the solidification device (70) and/or compaction device (50) so as to be movable across the build area (8), for locally pre-irradiating the applied layer of the building material (15).

11. A computer program loadable into a programmable control unit of a manufacturing device according to one of claims 6 to 10,
wherein the manufacturing device further comprises an induction coil and/or a radiation heater (60) arranged between the recoating unit (40) and the solidification device (70) and/or compaction device (50) so as to be movable across the build area (8), for locally heating the applied layer of the building material (15), and the manufacturing device comprises a pre-irradiation energy source arranged between the recoating unit (40) and the solidification device (70) and/or compaction device (50) so as to be movable across the build area (8), for locally pre-irradiating the applied layer of the building material (15),
and wherein the computer program comprises program code means to implement all steps of a method according to one of claims 1 to 5 when the computer program is executed in the control unit.

12. A control device (29) for a manufacturing device (1) according to one of claim 6 to 10,
wherein the manufacturing device (1) further comprises an induction coil and/or a radiation heater (60) arranged between the recoating unit (40) and the solidification device (70) and/or compaction device (50) so as to be movable across the build area (8), for locally heating the applied layer of the building material (15), and the manufacturing device comprises a pre-irradiation energy source arranged between the recoating unit (40) and the solidification device (70) and/or compaction device (50) so as to be movable across the build area (8), for locally pre-irradiating the applied layer of the building material (15), and
the control unit (29) is configured to control the manufacturing device (1) such that it implements all steps of a method according to one of claims 1 to 5 when a computer program according to claim 11 is executed in the control unit.

## Revendications

1. Procédé de fabrication pour la fabrication additive d'un objet tridimensionnel (2) par application couche par couche et solidification sélective d'un matériau de construction (15) qui est une poudre, comprenant les étapes suivantes :
application d'une couche du matériau de construction (15) à l'intérieur d'un champ de construction (8) au moyen d'un dispositif de revêtement (16) se déplaçant dans une direction de revêtement (B) sur le champ de construction (8), une partie solidifiée de l'objet à fabriquer (2) étant entourée par une poudre (13) restant non solidifiée dans un lit de poudre (30) construit par des étapes de procédé précédentes et une couche de poudre supplémentaire du matériau de construction (15) étant ensuite appliquée sur ce lit de poudre (30) au moyen d'un déplacement du dispositif de revêtement (16) dans la direction de revêtement (B),
solidification sélective de la couche appliquée du matériau de construction (15) à des emplacements qui correspondent à une section transversale de l'objet à fabriquer (2) au moyen d'un dispositif de solidification (20 ; 70), et
répétition des étapes d'application et de solidification jusqu'à ce que l'objet tridimensionnel (2) soit terminé,
le dispositif de solidification (70) et/ou un dispositif de compactage (50) se déplaçant derrière une unité de revêtement (40) du dispositif de revêtement (16) dans la direction de revêtement (B) sur le champ de construction (8), l'unité de revêtement (40) contenant une lame de dispositif de revêtement (41) située à l'avant dans la direction de revêtement (B) et une lame de dispositif de revêtement (42) située à l'arrière dans la direction de revêtement (B) ou contenant un rouleau de dispositif de revêtement (45), et le dispositif de compactage contenant une lame (51) ou un rouleau (55) approprié pour compacter la couche appliquée du matériau de construction, et la distance du bord inférieur de la lame (51) ou du rouleau (55) du dispositif de compactage par rapport au lit de poudre (30) étant inférieure à celle du bord inférieur de la lame de dispositif de revêtement (42) située à l'arrière ou du rouleau de dispositif de revêtement (45) et
une action locale limitée sur une zone entre l'unité de revêtement (40) se déplaçant sur le champ de construction (8) et le dispositif de solidification (70) et/ou le dispositif de compactage (50) se déplaçant derrière l'unité de revêtement (40) sur le champ de construction (8) étant réalisée sur la couche appliquée du matériau de construction (15) et
l'action limitée localement sur la couche appliquée du matériau de construction (15) comprenant un chauffage local, le chauffage local étant de préférence effectué au moyen d'une induction et/ou d'un rayonnement, et/ou
l'action limitée localement sur la couche appliquée du matériau de construction (15) comprenant une pré-exposition, et/ou
l'action limitée localement sur la couche appliquée (15) du matériau de construction comprenant un retrait au moins partiel d'au moins un composant de la couche de matériau de construction.

2. Procédé de fabrication selon la revendication 1, dans lequel l'application de la couche du matériau de construction (15) au moyen du dispositif d'enduction (16) comprend une extraction du matériau de construction appliqué en une couche (31) selon des critères prédéfinis en ce qui concerne une étendue de surface et/ou une épaisseur et/ou une nature de surface et/ou une densité de la couche.

3. Procédé de fabrication selon la revendication 1 ou 2, dans lequel l'action limitée localement sur la couche appliquée du matériau de construction (15) comprend une introduction d'un agent absorbant et/ou d'un agent inhibiteur dans la couche de matériau de construction.

4. Procédé de fabrication selon la revendication 3, dans lequel l'agent absorbant et/ou l'agent inhibiteur est liquide, pâteux et/ou solide et/ou contient des particules creuses remplies de liquide ou de pâte.

5. Procédé de fabrication selon l'une quelconque des revendications 1 à 4, dans lequel l'action limitée localement sur la couche appliquée du matériau de construction (15) comprend une exposition de la couche à un fluide interagissant au moins en surface avec au moins un composant du matériau de construction (15).

6. Dispositif de fabrication (1) pour la fabrication additive d'un objet tridimensionnel (2) par application couche par couche et solidification sélective d'un matériau de construction (15), le matériau de construction étant une poudre, contenant :
un dispositif de revêtement (16) déplaçable dans une direction de revêtement (B) sur un champ de construction (8) pour l'application d'une couche du matériau de construction (8) à l'intérieur du champ de construction (8), une partie solidifiée de l'objet à fabriquer (2) étant entourée par une poudre (13) restant non solidifiée dans un lit de poudre (30) construit par des étapes de procédé précédentes et une couche de poudre supplémentaire du matériau de construction (15) étant ensuite appliquée sur ce lit de poudre (30) au moyen d'un déplacement du dispositif de revêtement (16) dans la direction de revêtement (B), et
un dispositif de solidification (20 ; 70) pour la solidification sélective de la couche appliquée à des emplacements qui correspondent à une section transversale de l'objet à fabriquer (2),
le dispositif de fabrication (1) étant réalisé et/ou commandé pour répéter les étapes d'application et de solidification sélective jusqu'à ce que l'objet (2) soit terminé,
le dispositif de solidification (70) et/ou un dispositif de compactage (50) contenu en outre dans le dispositif de fabrication (1) étant disposés de manière déplaçable derrière une unité de revêtement (40) du dispositif de revêtement (16) dans la direction de revêtement (B) sur le champ de construction (8), l'unité de revêtement (40) contenant une lame de dispositif de revêtement (41) située à l'avant dans la direction de revêtement (B) et une lame de dispositif de revêtement (42) située à l'arrière dans la direction de revêtement (B) ou contenant un rouleau de dispositif de revêtement (45), et le dispositif de compactage contenant une lame (51) ou un rouleau (55) approprié pour compacter la couche appliquée du matériau de construction, et la distance du bord inférieur de la lame (51) ou du rouleau (55) du dispositif de compactage par rapport au lit de poudre (30) étant inférieure à celle du bord inférieur de la lame de dispositif de revêtement (42) située à l'arrière ou du rouleau de dispositif de revêtement (45) et
le dispositif de fabrication (1) étant commandé pour réaliser une action locale limitée sur une zone entre l'unité de revêtement (40) se déplaçant sur le champ de construction (8) et le dispositif de solidification (70) et/ou le dispositif de compactage (50) se déplaçant derrière l'unité de revêtement (40) sur le champ de construction (8) sur la couche appliquée du matériau de construction (15) et
l'action limitée localement sur la couche appliquée du matériau de construction (15) comprenant un chauffage local, le chauffage local étant de préférence effectué au moyen d'une induction et/ou d'un rayonnement, et/ou
l'action limitée localement sur la couche appliquée du matériau de construction (15) comprenant une pré-exposition, et/ou
l'action limitée localement sur la couche appliquée (15) du matériau de construction comprenant un retrait au moins partiel d'au moins un composant de la couche de matériau de construction.

7. Dispositif de fabrication selon la revendication 6, dans lequel le dispositif de solidification est un dispositif d'exposition (70) qui est réalisé pour émettre un rayonnement (71) approprié pour la solidification du matériau de construction.

8. Dispositif de fabrication selon la revendication 6 ou 7, dans lequel le dispositif de compactage contient une lame (51) ou un rouleau (55) approprié pour compacter la couche appliquée du matériau de construction.

9. Dispositif de fabrication selon l'une quelconque des revendications 6 à 8, qui contient une bobine d'induction et/ou un chauffage par rayonnement (60) qui est disposé de manière déplaçable entre l'unité de revêtement (40) et le dispositif de solidification (70) et/ou le dispositif de compactage (50) sur le champ de construction (8), pour le chauffage local de la couche appliquée du matériau de construction (15).

10. Dispositif de fabrication selon l'une quelconque des revendications 6 à 9, qui contient une source d'énergie de pré-exposition qui est disposée de manière déplaçable entre l'unité de revêtement (40) et le dispositif de solidification (70) et/ou le dispositif de compactage (50) sur le champ de construction (8), pour la pré-exposition locale de la couche appliquée du matériau de construction (15).

11. Programme informatique qui peut être chargé dans une unité de commande programmable d'un dispositif de fabrication selon l'une quelconque des revendications 6 à 10,
le dispositif de fabrication contenant en outre une bobine d'induction et/ou un chauffage par rayonnement (60) qui est disposé de manière déplaçable entre l'unité de revêtement (40) et le dispositif de solidification (70) et/ou le dispositif de compactage (50) sur le champ de construction (8), pour le chauffage local de la couche appliquée du matériau de construction (15), et le dispositif de fabrication contenant une source d'énergie de pré-exposition qui est disposée de manière déplaçable entre l'unité de revêtement (40) et le dispositif de solidification (70) et/ou le dispositif de compactage (50) sur le champ de construction (8), pour la pré-exposition locale de la couche appliquée du matériau de construction (15), et
le programme informatique présentant des moyens de code de programme pour exécuter toutes les étapes d'un procédé selon l'une quelconque des revendications 1 à 5 lorsque le programme informatique est exécuté sur l'unité de commande.

12. Dispositif de commande (29) pour un dispositif de fabrication (1) selon l'une quelconque des revendications 6 à 10,
le dispositif de fabrication contenant en outre une bobine d'induction et/ou un chauffage par rayonnement (60) qui est disposé de manière déplaçable entre l'unité de revêtement (40) et le dispositif de solidification (70) et/ou le dispositif de compactage (50) sur le champ de construction (8), pour le chauffage local de la couche appliquée du matériau de construction (15), et le dispositif de fabrication contenant une source d'énergie de pré-exposition qui est disposée de manière déplaçable entre l'unité de revêtement (40) et le dispositif de solidification (70) et/ou le dispositif de compactage (50) sur le champ de construction (8), pour la pré-exposition locale de la couche appliquée du matériau de construction (15), et
l'unité de commande (29) étant réalisée pour commander le dispositif de fabrication (1) de telle sorte qu'il exécute toutes les étapes d'un procédé selon l'une quelconque des revendications 1 à 5 lorsqu'un programme informatique selon la revendication 11 est exécuté sur l'unité de commande.
